# EUROPÄISCHE PATENTSCHRIFT

(11) **EP 2 666 576 B1**
(45) Veröffentlichungstag und Bekanntmachung des Hinweises auf die Patenterteilung: **21.09.2016**
(21) Anmeldenummer: 13180675.4
(22) Anmeldetag: 01.09.2011
(51) Int. Cl.: B23K 9/28

(54) **Schweiss- oder Schneidbrenner mit Zwangsluftkühlung**
Welding or cutting torch with forced air cooling
Chalumeau de soudage ou de découpe refroidit par air forcé

(30) Priorität: 09.09.2010 DE 102010037428
(43) Veröffentlichungstag der Anmeldung: 27.11.2013
(62) Teilanmeldung aus: 11751895.1
(73) Patentinhaber: Alexander Binzel Schweisstechnik GmbH & Co. KG, 35418 Buseck (DE)
(72) Erfinder: Kaemmerer, Bert, 01187 Dresden (DE); Schulz, Ronald, 01189 Dresden (DE); Henche, Klaus, 35792 Löhnberg (DE); Kessler, Udo, 35463 Fernwald (DE)
(74) Vertreter: Müller, Eckhard

(56) Entgegenhaltungen:
- DE-A1-102006 010 331
- US-A- 5 248 868
- US-A1- 2004 020 911

## Beschreibung

Die Erfindung betrifft einen luftgekühlten Schweiß- oder Schneidbrenner, insbesondere einen Handschweißbrenner und/oder Schutzgasschweißbrenner, nach dem Oberbegriff des Anspruchs 1, welcher aus der DE 10 2006 010331 bekannt ist.

Die Erfindung betrifft außerdem ein Verfahren zum Betreiben eines Schweiß oder Schneidbrenners.

In Bezug auf die Kühlung sind grundsätzlich zwei unterschiedliche Arten der vorgenannten Geräte bekannt. Nämlich zum einen Geräte, die die Wärme im Wesentlichen durch Strahlung und Konvektion abgeben. Bei solchen Geräten wird von Luftkühlung gesprochen. Daneben gibt es flüssigkeitsgekühlte, insbesondere wassergekühlte, Geräte, die insbesondere bei hohen Schweiß- oder Schneidströmen oder teilweise bereits bei Einschaltdauern von über 35 Prozent eingesetzt werden. In der Praxis werden flüssigkeitsgekühlte Geräte regelmäßig bei Einschaltdauern von über 60 Prozent eingesetzt. Flüssigkeitsgekühlte Geräte sind grundsätzlich leistungsfähiger als luftgekühlte. Jedoch sind diese Geräte konstruktiv sehr viel aufwendiger und auch teurer.

Es ist theoretisch grundsätzlich möglich, luftgekühlte Brenner unter Inkaufnahme einer höheren Grifftemperatur bei höheren Leistungen zu betreiben. Jedoch ist die maximale Griffaußentemperatur durch Normung auf 30° C über der Umgebungstemperatur festgelegt.

Es ist bekannt, zur Kühlung der Brennerdüse das Prozessgas selbst zu verwenden. Dies führt jedoch insbesondere bei der Verwendung von Mischgasen, die naturgemäß keine große Wärmekapazität aufweisen, nicht immer zu einem ausreichend großen Kühlungseffekt. Beispielsweise offenbart DE 42 34 267 A1 einen Plasmabrennerkopf für einen Plasmaschweiß- und Schneidbrenner, bei dem ein Elektrodenhalter so mit einem Kühlkörper verwendet wird, dass der Gasstrom in einen Teilstrom als Plasmagas und einen Teilstrom als Sekundärgas oder Kühlgas für die Schneiddüse aufgeteilt wird.

Auch DE 26 45 679 offenbart einen schutzgasgekühlten SchutzgasSchweißbrenner für das Schweißen mit unendlicher Elektrode mit einem speziellen Brennerkörper zur Teilung des Schutzgasstromes und mit einem schutzgasgekühlten Brennerrohr, das einen dünnwandigen Außenmantel zur Verbindung des Schlauchpaketes mit dem Düsenstock aufweist.

Ein flüssigkeitsgekühltes System ist beispielsweise aus US 2,949,528 bekannt. Das Kühlsystem dieser Vorrichtung weist einen Kühlmittelbehälter, eine Pumpe und einen Wärmetauscher auf.

DE 10 2006 010 331 A1 offenbart eine druckluftgekühlte Schweißpistole für ein Fülldrahtschweißgerät, wobei in einem Schweißgerät mittels eines Luftspenders Druckluft erzeugt wird, die mittels eines separaten Luftschlauches zu einer Gasdüse am Schweißkopf geleitet werden. Der Luftschlauch selbst dient auf Grund seiner isolierenden Eigenschaften selbst nicht zur Kühlung. Nach einer speziellen Ausführung kann der Luftschlauch auch durch den Schweißpistolengriff hindurch geführt sein kann. Allerdings erfolgt ausschließlich eine Kühlung durch die aus dem Luftschlauch austretende Luft nicht durch den Luftschlauch selbst.

Aus US 2004/0020911 A1 ist ein Schweißsystem mit einem Handgriff bekannt. Das Innere des Handgriffs kann durch Luftstrom gekühlt werden, wobei der Handgriff mit einer Vielzahl von Ventilationslöchern versehen ist, die es ermöglichen, dass Luft durch den Handgriff strömen kann.

Aus US 5,248,868 ist ein luftgekühlter Schweißbrenner bekannt. Der Schweißbrenner beinhaltet einen Anschlussblock mit einer Vielzahl von Öffnungen oder Kanälen durch die Druckluft geleitet werden kann.

Es ist die Aufgabe der vorliegenden Erfindung, einen Schweiß- oder Schneidbrenner anzugeben, der ohne Erhöhung der Grifftemperatur eine erhöhte Schweiß- bzw. Schneidleistung bereitstellt und der ohne zusätzliche Energieversorgungsleitungen für die zur Lösung dieser Aufgabe erforderlichen Komponenten auskommt.

Die Aufgabe wird durch einen Schweiß- oder Schneidbrenner mit den Merkmalen des Anspruchs 1 gelöst. Dabei ist eine Fördervorrichtung, insbesondere ein Lüfter oder ein Verdichter, vorgesehen, die Umgebungsluft als Kühlungsluft durch mindestens einen Kühlkanal des Schweiß- oder Schneidbrenners fördert, wobei die Fördervorrichtung die Energie zu ihrem Betreiben parasitär zumindest einer Prozesskomponente und/oder beim Schweiß- oder Schneidprozess entstehenden Prozessprodukten entnimmt. Die Fördereinrichtung ist zumindest teilweise an und/oder in einem Griff des Schweiß- oder Schneidbrenners angeordnet.

Es ist eine weitere Aufgabe der vorliegenden Erfindung, ein Verfahren zum Betreiben eines Schweiß- oder Schneidbrenners anzugeben, das es ermöglicht, ohne Erhöhung der Grifftemperatur mit höherer Schweiß- bzw. Schneidleistung zu arbeiten und das ohne zusätzliche Energieversorgungsleitungen betrieben werden kann.

Die weitere Aufgabe wird durch ein Verfahren nach Anspruch 9 gelöst. Dabei treibt eine zumindest teilweise an und/oder in einem Griff des Schweiß- oder Schneidbrenners angeordnete Fördervorrichtung Umgebungsluft zur Strömung durch einen Kühlkanal zur Zwangskühlung zumindest eines Teils des Schweiß- oder Schneidbrenners an. Die Energie zum Betreiben der Fördervorrichtung wird - direkt oder indirekt - parasitär Prozesskomponenten und/oder Prozessprodukten entnommen.

Der erfindungsgemäße Schweiß- bzw. Schneidbrenner hat den Vorteil, dass er bei - abgesehen vom Kühlsystem - grundsätzlich gleichem Aufbau, nämlich bei Verwendung gleicher Materialarten und -dicken bei einer wesentlich höheren Schweiß- bzw. Schneidleistung betrieben werden kann. Bei Versuchen hat sich gezeigt, dass erfindungsgemäß Brenner eine Leistungssteigerung von über 10 Prozent erzielbar ist. Die Erfindung kann jedoch alternativ auch dazu genutzt werden, mit reduziertem Materialaufwand einen Brenner herzustellen, der dieselbe Leistung aufweist, wie ein nach herkömmlicher Bauart hergestellter Brenner. Demgemäß können auf der Basis der vorliegenden Erfindung der Herstellaufwand und/oder die Herstellkosten reduziert werden.

Dass die Fördereinrichtung erfindungsgemäß zumindest teilweise an und/oder in einem Griff des Schweiß- oder Schneidbrenners angeordnet ist hat den Vorteil, dass die Fördereinrichtung im Wesentlichen in der Nähe der zu kühlenden Bauteile arbeitet, sodass nur geringe Reibungsverluste der Kühlungsluft auftreten und demgemäß bereits die Verwendung eines einfachen Lüfters, beispielsweise eines Ventilatorlüfters mit einem Ventilatordurchmesser von ca. 20 mm ausreichend Kühlleistung bereitstellt.

Bei einer vorteilhaften Ausführungsform ist vorgesehen, dass die zur Strömung angetriebene Umgebungsluft einen Griff des Schweiß- oder Schneidbrenners und/oder einen Griffinnenraum, insbesondere den gesamten Griffinnenraum, des Schweiß- oder Schneidbrenners und/oder eine Gasdüse außerhalb des lichtbogenseitigen Gasdüseninnenraumes kühlt.

Um zuverlässig eine ausreichende Kühlung zu gewährleisten kann vorteilhaft vorgesehen sein, dass die zur Strömung angetriebene Umgebungsluft getrennt von Prozessgasen und/oder einem Lichtbogen und/oder der Schweißschmelze geführt wird.

Vorzugsweise ist der Kühlkanal ausschließlich zur Durchleitung von Kühlungsluft vorgesehen, insbesondere ist es von Vorteil, wenn der Kühlkanal eine von anderen Leitungen, wie Leitungen für Prozessgas und/oder Schutzgas und/oder für Brenngas und/oder für plasmabildendes Gas, separate Leitung für die zur Kühlung vorgesehene Umgebungsluft ist. Ein besonderer Vorteil einer solchen Ausführungsform liegt darin, dass die Kühlungsluft auch dann strömend zur Kühlung eingesetzt werden kann, wenn der Brenner gerade ausgeschaltet ist und demgemäß kein Prozessgas fließt.

Es hat sich gezeigt, dass bei einer besonderen Ausführungsform bei der permanent - also nicht nur während der Einschaltphasen, sondern auch in Schweiß- bzw. Schneidpausen - eine Kühlung erfolgt, eine besonders hohe Leistungssteigerung des Brenners erzielbar ist. Es kann jedoch alternativ auch vorgesehen sein, dass die Kühlungsluft ausschließlich während der Einschaltzeiten gefördert wird. Auch hierbei wird eine signifikante Leistungssteigerung des Brenners ermöglicht, die jedoch ca. 40 Prozent niedriger ist als bei permanenter Kühlung.

Bei dem erfindungsgemäßen Schweiß- oder Schneidbrenner bzw. dem erfindungsgemäßen Verfahren zum Betreiben eines Schweiß- oder Schneidbrenners ist vorgesehen, dass die Fördereinrichtung die Energie zu ihrem Betreiben parasitär zumindest einer Prozesskomponente und/oder einem beim Schweiß- oder Schneidprozess entstehenden Prozessprodukt entnimmt.

Als Prozesskomponente kommt hierbei insbesondere das parasitäre Abgreifen von elektrischem Schweiß- oder Schneidstrom in Betracht. Dies kann beispielsweise durch direkten Abgriff erfolgen, wobei zum Schließen des Stromkreises eine zusätzliche zur Fördereinrichtung oder zu einem Zwischenspeicher führende Leitung vorgesehen ist.

Alternativ oder zusätzlich ist es auch möglich, die Energie zum Betreiben der Fördereinrichtung induktiv abzugreifen. Hierzu kann beispielsweise eine Induktionsschleife oder eine Induktionsspule in der Nähe eines Leiters, der den Schweißstrom führt - beispielsweise in der Nähe des Schweißdrahtes selbst - angeordnet sein. Diese Ausführungsform hat den besonderen Vorteil, dass der Stromkreis zum Betreiben der Fördereinrichtung galvanisch vom Stromkreis zum Schweißen bzw. Schneiden getrennt ist, und dass der Stromkreis zum Schweißen bzw. Schneiden demgemäß nur äußerst unwesentlich beeinflusst wird.

Der induktive Abgriff kann im Bereich des Handgriffs des Schweißbrenners erfolgen. Dies hat den Vorteil, dass - sofern die Fördereinrichtung auch im Bereich des Handgriffs angeordnet ist - keine langen elektrischen Zuleitungen verlegt werden müssen. Allerdings hat diese Ausführungsform den Nachteil, dass die zum Induktionsabgriff nötigen Bauteile (zum Beispiel Induktionsspule) das Gewicht des Brennerkopfes erhöhen. Alternativ kann vorgesehen sein, dass der Induktionsabgriff und/oder die Fördereinrichtung nicht am Brennerkopf, sondern beispielsweise am Maschinenanschluss und/oder an dem vom Brennerkopf abgewandten Ende des Schlauchpaketes angeordnet sind. Eine solche Ausführungsform weist einen Brennerkopf mit einem niedrigeren Gewicht auf, jedoch muss bei einer solchen Ausführungsform eine oder mehrere Leitungen zur Leitung des elektrischen Stroms zum Betreiben der Fördereinrichtung bzw. eine Leitung zum Führen der Kühlungsluft zum Brennerkopf vorgesehen sein.

Bei einer ganz besonders vorteilhaften Ausführungsform ist zumindest eine Photozelle zur Gewinnung der Energie zum Betreiben der Fördervorrichtung vorgesehen. In besonders vorteilhafter Weise kann die Photozelle derart angeordnet sein, dass sie das beim Schweiß- oder Schneidprozess entstehende Licht direkt oder indirekt empfängt und in elektrische Energie zum Betreiben der Fördereinrichtung umsetzt. Es ist jedoch alternativ oder zusätzlich auch denkbar, dass die Photozelle unabhängig vom Prozesslicht im Wesentlichen oder ausschließlich Umgebungslicht empfängt.

Bei einer besonders vorteilhaften Ausführungsform des erfindungsgemäßen Schweiß- oder Schneidbrenners ist ein Energiespeicher und/oder ein Akku zum Speichern von Energie zum Betreiben der Fördervorrichtung vorgesehen. Diese Ausführungsform hat den besonderen Vorteil, dass auch während der Ausschaltzeiten Energie zum Betreiben der Fördervorrichtung zur Verfügung steht. Insbesondere kann vorgesehen sein, dass der Speicher während der Einschaltzeiten - beispielsweise durch parasitären, insbesondere induktiven Abgriff und/oder durch Umwandeln von Prozesslicht mittels einer Photozelle - aufgeladen wird, wobei die Kapazität des Energiespeichers vorzugsweise derart bemessen ist, dass genügend Energie zum Weiterbetreiben der Fördereinrichtung während der Ausschaltzeiten bereitsteht.

In erfindungsgemäßer Weise ist vorgesehen, dass der Schweiß- oder Schneidbrenner zumindest eine Öffnung aufweist, durch die Umgebungsluft als Kühlungsluft ansaugbar und/oder einführbar ist. Die Öffnung kann beispielsweise an einem Griff des Schweiß- oder Schneidbrenners angeordnet sein. Insbesondere kann vorgesehen sein, dass die Öffnung an einem vom Brennerhals abgewandten Ende eines Griffs des Schweiß- oder Schneidbrenners angeordnet ist. Bei der letztgenannten Ausführungsform wird in vorteilhafter Weise ausgenutzt, dass die Umgebungsluft im hinteren Bereich des Handgriffs, also hinter der Hand des Schweißers, ca. 4 bis 6 Grad kühler ist, als im Bereich des vorderen, dem Brennerhals zugewandten Ende des Griffes. Auf diese Weise wird eine erhöhte Kühlleistung erzielt, ohne dass die Arbeitsleistung der Fördereinrichtung erhöht werden muss.

Alternativ oder zusätzlich kann auch eine Zuführungsleitung vorgesehen sein, die die Öffnung aufweist. Die Zuführungsleitung hat den Vorteil, dass die Kühlungsluft noch weiter entfernt vom Prozessbereich - also aus Bereichen noch niedriger Umgebungslufttemperatur - zuführen kann. Hierdurch kann eine zusätzlich erhöhte Kühlleistung erzielt werden, wobei jedoch zu berücksichtigen ist, dass aufgrund der Reibungsverluste in der Zuführleitung in aller Regel auch höhere Pumpleistungen der Fördervorrichtung vonnöten sind.

Im Sinne der vorliegenden Erfindung ist es von untergeordneter Bedeutung, an welcher Stelle des Kühlkanals - am Anfang, am Ende oder dazwischen - die Fördereinrichtung angeordnet ist. Zumeist kann jedoch eine höhere Kühlungsleistung erreicht werden, wenn die Fördereinrichtung am Anfang der Kühlleitung und/oder im Bereich der Öffnung angeordnet ist, weil bei einer solchen Anordnung höhere Druckdifferenzen erzielbar sind als bei einer saugenden Anordnung.

In jedem Fall ist es von Vorteil, die Öffnung bzw. die Öffnungen für die Umgebungsluft mit einem Filter zu versehen, um das Eindringen von Schmutzpartikeln zu verhindern.

In erfindungsgemäßer Weise kann der Kühlkanal in oder an einem Griff des Schweiß- oder Schneidbrenners und/oder in oder an einem Brennerhals und/oder in oder an einem Innenrohr eines Brennerhalses und/oder in oder an einem Außenrohr eines Brennerhalses und/oder in oder an einer Brennerdüse angeordnet sein. Es ist auch möglich, mehrere separate oder miteinander verbundene Kühlkanäle vorzusehen. Beispielsweise kann ein Kühlkanal dadurch gebildet sein, dass ein Innenrohr und ein Außenrohr des Brennerhalses durch Stege voneinander auf Abstand gehalten werden, wobei die Kühlungsluft zwischen Innen- und Außenrohr strömt. Insbesondere kann in vorteilhafter Weise vorgesehen sein, dass der Kühlkanal und/oder die Fördervorrichtung derart angeordnet sind, dass Kühlungsluft aus dem Innenraum eines Griffs in Nuten eines Innenrohrs eines Brennerhalses strömt.

In vorteilhafter Weise kann alternativ oder zusätzlich vorgesehen sein, dass der Kühlkanal und/oder die Fördervorrichtung derart angeordnet sind, dass Kühlungsluft den - vorzugsweise gesamten - Innenraum eines Griffs des Schweiß- oder Schneidbrenners durchströmt. Auf diese Weise wird eine besonders gute Kühlung des Griffs erreicht, dies insbesondere mit Hinblick auf die normenmäßige Anforderung, dass die Grifftemperaturerhöhung an der Außenseite gegenüber der Umgebungstemperatur 30°C nicht überschreiten darf.

Um stets ein möglichst große Temperaturdifferenz zwischen der Kühlungsluft und den zu kühlenden Bauteilen auszunutzen, sind bei einer besonderen Ausführungsform des erfindungsgemäßen Schweiß- oder Schneidbrenners der Kühlkanal und/oder die Fördereinrichtung derart angeordnet, dass die Strömungsrichtung der Kühlungsluft zumindest teilweise - vorzugsweise im Wesentlichen - in Richtung des Temperaturgradienten des Schweiß- oder Schneidbrenners verläuft. Beispielsweise kann vorgesehen sein, dass der Kühlluftstrom zunächst damit beginnt, die Brennerteile zu kühlen, welche in Richtung des Lichtbogens die niedrigste Betriebstemperatur aufweisen und dann in Richtung der Bauteile strömt - also in Richtung des Lichtbogens -, die eine höhere Temperatur aufweisen.

Zur Erreichung einer möglichst großen Kühlleistung, insbesondere des heißesten Teils des Brennerhalses, nämlich des Innenrohres, kann - wie bereits erwähnt - in vorteilhafter Weise vorgesehen sein, dass die Kühlungsluft an außenliegenden Nuten des Innenrohres entlang geleitet wird.

Bei einer besonderen Ausführungsform sind der Kühlkanal und/oder die Fördervorrichtung derart angeordnet, dass die Kühlungsluft zunächst in Richtung des Prozesses im Brennerhals entlang strömt und dann am Ende des Brennerhalses und/oder am Düsenstock radial nach außen - insbesondere gegen ein zu einem Griff hin verlängertes Außenrohr - der Brennerdüse strömt. Diese Ausführungsform ermöglicht eine besonders gute Kühlleistung am Brennerhals und an der Brennerdüse und gewährleistet außerdem, dass die Kühlungsluft zumindest nicht direkt in den Bereich des Schweiß- oder Schneidprozesses geblasen wird.

Natürlich sind auch andere Ausführungsformen, die ein direktes Einströmen von Kühlungsluft in den Bereich des Schweiß- oder Schneidprozesses vermeiden, möglich und von Vorteil.

Beispielsweise kann vorgesehen sein, dass ein Außenrohr der Brennerdüse die Strömungsrichtung der Kühlungsluft von der Austrittsöffnung der Brennerdüse weg und/oder in Richtung des Griffs umlenkt.

Zur Erzielung einer ausreichenden Kühlleistung sind bei einer vorteilhaften Ausführungsform die Fördereinrichtung und der Kühlkanal derart ausgebildet, dass ein Kühlluftstrom von mindestens 15 l/min., insbesondere von 15 - 20 l/min. erreicht wird.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine Detailansicht eines erfindungsgemäßen Schweißbrenners
- Fig. 2: eine Detailansicht des Griffbereichs eines anderen erfindungsgemäßen Schweißbrenners und
- Fig. 3: einen an ein Schweißstrom-Netzteil angeschlossenen Schweißbrenner.

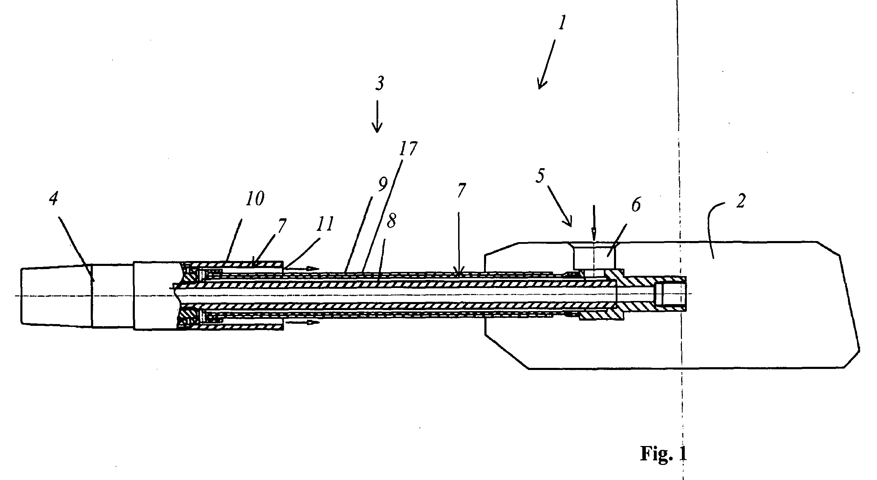

Fig. 1 zeigt den Brennerkopf 1 eines erfindungsgemäßen Schweißbrenners mit einem Griff 2, einem Brennerhals 3 und einer Brennerdüse 4. Im Griff 2 ist eine Fördervorrichtung 5, nämlich ein Lüfter 6 angeordnet, der Umgebungsluft als Kühlungsluft ansaugt und zur Kühlung durch einen Kühlkanal 7 fördert. Der Kühlkanal 7 verläuft zwischen einem Innenrohr 8 und einem Isolierrohr 17, das an der Innenseite eines Außenrohres 9 angeordnet ist, in Richtung auf die Gasdüse 4 und wird dann von einem Düsenaußenrohr 10 in Richtung zum Griff 2 umgelenkt und verläuft bis zum Erreichen der Austrittsöffnung 11 zwischen der Außenseite des Außenrohres 9 und der Innenseite des Düsenaußenrohres 10. Das Isolierrohr 17 dient zur elektrischen Isolierung des Außenrohres 9 vom Schweißstrom.

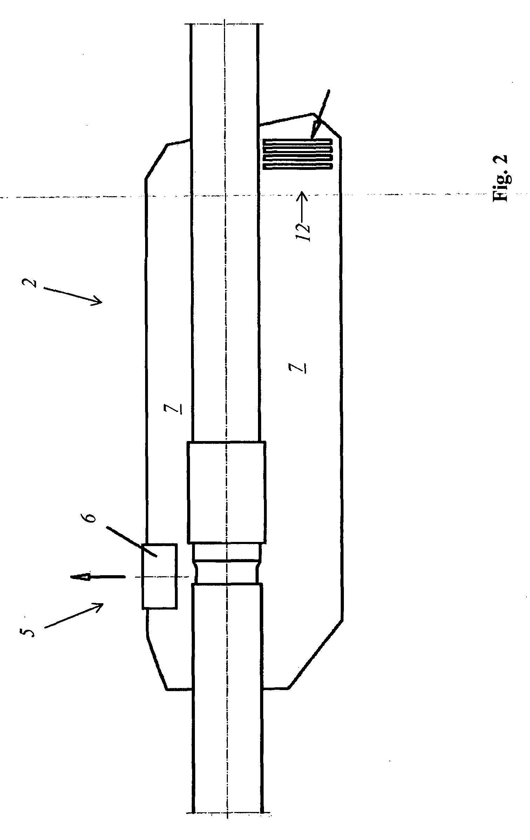

Fig. 2 zeigt eine Variante, bei der die Fördervorrichtung 5 am Ende des durch den gesamten Griff verlaufenden Kühlkanals 7 angeordnet ist. Durch eine Öffnung 12, die am Griff 2 angeordnet ist, wird Umgebungsluft eingesaugt, die anschließend als Kühlungsluft durch den Innenraum des Griffes 2 strömt und zum Schluss aus der Fördervorrichtung 5, nämlich dem Lüfter 6, ausströmt.

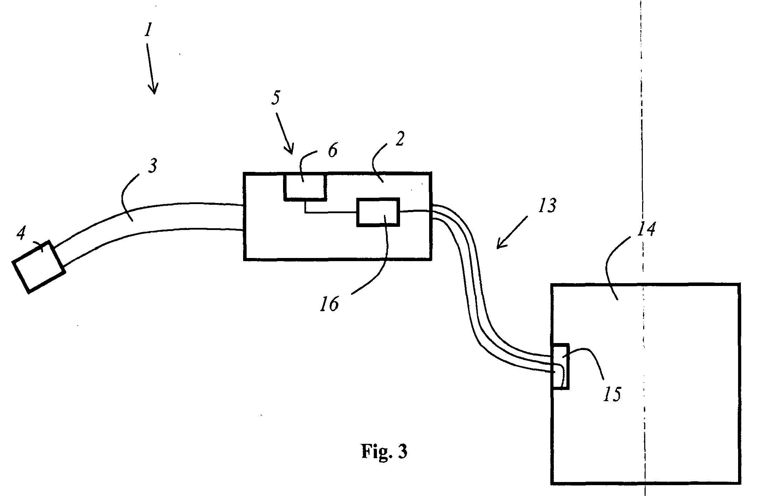

Fig. 3 zeigt einen erfindungsgemäßen Schweißbrenner mit einem in einem Griff 2 angeordneten Lüfter 6. Der Brennerkopf 1 ist über ein Schlauchpaket 13 mit einer Schweißstromquelle 14 verbunden. Am Ausgang der Schweißstromquelle 14 ist eine Induktionsspule 15 zum parasitären Abgreifen der Energie zum Betreiben der Fördervorrichtung 5 angeordnet. Die abgegriffene elektrische Energie wird durch eigene Zuleitungen im Schlauchpaket 13 einem Akku 16 zugeführt, der seinerseits an den Lüfter 6 angeschlossen ist. Diese Ausführungsform hat den Vorteil, dass auch während der Ausschaltzeiten Energie zum Betreiben des Lüfters bereitsteht, sodass auch während der Ausschaltzeiten gekühlt werden kann.

### Bezugszeichenliste

- 1: Brennerkopf
- 2: Griff
- 3: Brennerhals
- 4: Düse
- 5: Fördervorrichtung
- 6: Lüfter
- 7: Kühlkanal
- 8: Innenrohr
- 9: Außenrohr
- 10: Düsenaußenrohr
- 11: Austrittsöffnung
- 12: Öffnung
- 13: Schlauchpaket
- 14: Schweißstrom-Netzteil
- 15: Induktionsspule
- 16: Akku
- 17: Isolierrohr

## Patentansprüche

1. Luftgekühlter Schweiß- oder Schneidbrenner, insbesondere Handschweißbrenner und/oder Schutzgasschweißbrenner, wobei eine Fördervorrichtung (5), insbesondere ein Lüfter (6) oder ein Verdichter, vorgesehen ist, die Umgebungsluft als Kühlungsluft durch mindestens einen Kühlkanal (7) des Schweiß- oder Schneidbrenners fördert, wobei die Fördervorrichtung (5) die Energie zu ihrem Betreiben parasitär zumindest einer Prozesskomponente und/oder beim Schweiß- oder Schneidprozess entstehenden Prozessprodukten entnimmt, **dadurch gekennzeichnet, dass** die Fördervorrichtung (5) zumindest teilweise an und/oder in einem Griff (2) des Schweiß- oder Schneidbrenners angeordnet ist.

2. Schweiß- oder Schneidbrenner nach Anspruch 1, **dadurch gekennzeichnet, dass** die Fördervorrichtung (5) Umgebungsluft als Kühlungsluft zur Kühlung eines Griffs des Schweiß- oder Schneidbrenners und/oder zur Kühlung eines Griffinnenraums, insbesondere des gesamten Griffinnenraums, des Schweiß- oder Schneidbrenners und/oder zur Kühlung einer Gasdüse außerhalb des lichtbogenseitigen Gasdüseninnenraumes durch mindestens einen Kühlkanal (7) des Schweiß- oder Schneidbrenners fördert.

3. Schweiß- oder Schneidbrenner nach Anspruch 1 oder 2, **dadurch gekennzeichnet, dass** die Kühlungsluft getrennt von Prozessgasen und/oder einem Lichtbogen und/oder der Schweißschmelze geführt ist, wobei der Kühlkanal (7) vorzugsweise eine von anderen Leitungen, wie Leitungen für Prozessgas und/oder Schutzgas und/oder für Brenngas und/oder für plasmabildendes Gas, separate Leitung für die Kühlungsluft ist, und insbesondere ausschließlich zur Durchleitung von Kühlungsluft dient.

4. Schweiß- oder Schneidbrenner nach einem der Ansprüche 1 bis 3, **dadurch gekennzeichnet, dass** die Fördervorrichtung (5) die Energie zu ihrem Betreiben parasitär, insbesondere durch direkten Abgriff und/oder durch induktive Kopplung, aus einem elektrischen Schweiß- oder Schneidstrom entnimmt, und insbesondere die Energie zu ihrem Betreiben parasitär dem Schweiß- oder Schneidstrom oder dem beim Schweiß- oder Schneidprozess entstehendem Licht und/oder der Prozesswärme entnimmt.

5. Schweiß- oder Schneidbrenner nach einem der Ansprüche 1 bis 4, **dadurch gekennzeichnet, dass**
a. zumindest eine Photozelle zur Gewinnung der Energie zum Betreiben der Fördervorrichtung (5) vorgesehen ist, und/oder dass
b. ein Energiespeicher und/oder ein Akku (16) zum Speichern von Energie zum Betreiben der Fördervorrichtung (5) vorgesehen ist.

6. Schweiß- oder Schneidbrenner nach einem der Ansprüche 1 bis 5, **dadurch gekennzeichnet, dass** zumindest eine Öffnung (12) vorgesehen ist, durch die Kühlungsluft ansaugbar und/oder einführbar ist.

7. Schweiß- oder Schneidbrenner nach Anspruch 6, **dadurch gekennzeichnet, dass** die Öffnung (12) an einem Griff (2) des Schweiß- oder Schneidbrenners , insbesondere an einem vom Brennerhals (3) abgewandten Ende eines Griffs (2) des Schweiß- oder Schneidbrenners angeordnet ist, oder dass eine Zuführungsleitung vorgesehen ist, die die Öffnung (12) aufweist, und/oder dass eine durch ein Schlauchpaket (13) des Schweiß- oder Schneidbrenners verlaufende Zuführungsleitung vorgesehen ist, die die Öffnung (12) aufweist.

8. Schweiß- oder Schneidbrenner nach einem der Ansprüche 6 oder 7, **dadurch gekennzeichnet, dass** die Fördervorrichtung (5) an oder in der Öffnung (12) angeordnet ist, und/oder dass vor der Öffnung (12) eine Filtervorrichtung angeordnet ist.

9. Schweiß- oder Schneidbrenner nach einem der Ansprüche 1 bis 8, **dadurch gekennzeichnet, dass** der Kühlkanal (7) in oder an einem Griff (2) und/oder in oder an einem Brennerhals (3) und/oder in oder an einem Innenrohr (8) eines Brennerhalses (3) und/oder in oder an einem Außenrohr (9) eines Brennerhalses (3) und/oder in oder an einer Brennerdüse (4) angeordnet ist.

10. Schweiß- oder Schneidbrenner nach einem der Ansprüche 1 bis 9, **dadurch gekennzeichnet, dass** der Kühlkanal (7) und/oder die Fördervorrichtung (5) derart angeordnet sind, dass
a. Kühlungsluft aus dem Innenraum eines Griffs (2) in Nuten eines Innenrohres (8) eines Brennerhalses (3) strömt und/oder dass
b. Kühlungsluft den, vorzugsweise gesamten Innenraum eines Griffs (2) durchströmt und/oder dass
c. die Strömungsrichtung der Kühlungsluft zumindest teilweise, vorzugsweise im Wesentlichen, in Richtung des Temperaturgradienten des Schweiß- oder Schneidbrenners verläuft und/oder dass
d. die Kühlungsluft am Ende eines Brennerhalses (3) und/oder an einem Düsenstock radial nach außen, insbesondere gegen ein, zum Griff (2) hin verlängertes Außenrohr (9) einer Brennerdüse (4) strömt und/oder dass
e. ein direktes Einströmen von Kühlungsluft in den Bereich des Schweiß- oder Schneidprozesses vermieden ist und/oder dass
f. ein Außenrohr (9) einer Brennerdüse (4) die Strömungsrichtung der Kühlungsluft von einer Austrittsöffnung der Brennerdüse (4) weg und/oder in Richtung eines Griffs (2) umgelenkt.

11. Verfahren zum Betreiben eines Schweiß- oder Schneidbrenners, wobei eine zumindest teilweise an und/oder in einem Griff (2) des Schweiß- oder Schneidbrenners angeordnete Fördervorrichtung (5) Umgebungsluft zur Strömung durch einen Kühlkanal zur Zwangskühlung zumindest eines Teils des Schweiß- oder Schneidbrenners antreibt und wobei Energie zum Betreiben der Fördervorrichtung (5) parasitär Prozesskomponenten und/oder Prozessprodukten entnommen wird.

12. Verfahren nach Anspruch 11, **dadurch gekennzeichnet, dass** die zur Strömung angetriebene Umgebungsluft einen Griff des Schweiß- oder Schneidbrenners und/oder einen Griffinnenraum, insbesondere den gesamten Griffinnenraum, des Schweiß- oder Schneidbrenners und/oder eine Gasdüse außerhalb des lichtbogenseitigen Gasdüseninnenraumes kühlt.

13. Verfahren nach Anspruch 11 oder 12, **dadurch gekennzeichnet, dass** die zur Strömung angetriebene Umgebungsluft getrennt von Prozessgasen und/oder einem Lichtbogen und/oder der Schweißschmelze geführt wird.

14. Verfahren zum Betreiben eines Schweiß- oder Schneidbrenners nach einem der Ansprüche 11 bis 13, **dadurch gekennzeichnet, dass** mit einer Fördervorrichtung (5), insbesondere einem Verdichter oder einem Lüfter (6), ein Kühlluftstrom - insbesondere von mindestens 15 Litern pro Minute, insbesondere von 15 bis 20 Litern pro Minute - erzeugt und/oder durch zumindest einen Kühlkanal (7) des Schweiß- oder Schneidbrenners geleitet wird.

15. Verfahren zum Betreiben eines Schweiß- oder Schneidbrenners nach einem der Ansprüche 11 bis 14, **dadurch gekennzeichnet, dass** die Energie zum Betreiben der Fördervorrichtung (5) - direkt oder indirekt - parasitär dem elektrischen Schweiß- oder Schneidstrom, und/oder dem beim Schweiß- oder Schneidprozess entstehenden Licht und/oder der beim Schweiß- oder Schneidprozess entstehenden Prozesswärme entnommen wird.

## Claims

1. Air-cooled welding or cutting torch, in particular manual welding torch and/or protective gas welding torch, wherein a conveying device (5), in particular a fan (6) or a compressor, is provided that conveys ambient air as cooling air through at least one cooling channel (7) of the welding or cutting torch, wherein the conveying device (5) extracts the energy for its operation in a parasitical manner from at least one process component and/or from process products that are generated during the welding or cutting process, **characterized in that** the conveying device (5) is at least in part arranged at and/or in a handle (2) of the welding or cutting torch.

2. Welding or cutting torch according to claim 1, **characterized in that** the conveying device (5) conveys ambient air as cooling air for cooling of a handle of the welding or cutting torch and/or for cooling a handle interior, in particular of the entire handle interior, of the welding or cutting torch and/or for cooling a gas nozzle outside of the arc-side gas nozzle interior through at least one cooling channel (7) of the welding or cutting torch.

3. Welding or cutting torch according to claim 1 or 2, **characterized in that** the cooling air is guided separately of process gases and/or an arc and/or the weld puddle, wherein the cooling channel (7) preferably is a conduit for cooling air that is separate from other conduits, such as conduits for process gas and/or protective gas and/or for fuel gas and/or for plasma-forming gas, and in particular serves exclusively for passing cooling air.

4. Welding or cutting torch according to one of the claims 1 to 3, **characterized in that** the conveying device (5) extracts the energy for its operation in a parasitical manner, in particular through a direct tapping and/or through inductive coupling, from an electric welding or cutting current, and in particular extracts the energy for its operation in a parasitical manner from the welding or cutting current, or from light generated during the welding or cutting process and/or from the process heat.

5. Welding or cutting torch according to one of the claims 1 to 4, **characterized in that**
a. at least one photo cell is provided for generating the energy for operating the conveying device (5), and/or **in that**
b. an energy storage and/or a battery (16) is provided for storing the energy for operating the conveying device (5).

6. Welding or cutting torch according to one of the claims 1 to 5, **characterized in that** at least one opening (12) is provided, through which cooling air can be sucked in and/or introduced.

7. Welding or cutting torch according to claim 6, **characterized in that** the opening (12) is arranged at a handle (2) of the welding or cutting torch, in particular at an end of the handle (2) of the welding or cutting torch that is facing away from the burner neck (3), or that a supply conduit is provided, which comprises the opening (12), and/or that a supply conduit is provided that extends through the tube package (13) of the welding or cutting torch and that comprises the opening (12).

8. Welding or cutting torch according to one of the claims 6 or 7, **characterized in that** the conveying device (5) is arranged at or in the opening (12), and/or **in that** a filter device is arranged in front of the opening (12).

9. Welding or cutting torch according to one of the claims 1 to 8, **characterized in that** the cooling channel (7) is arranged in or at a handle (2) and/or in or at a burner neck (3) and/or in or at an inner tube (8) of a burner neck (3) and/or in or at an outer tube (9) of a burner neck (3) and/or in or at a burner nozzle (4).

10. Welding or cutting torch according to one of the claims 1 to 9, **characterized in that** the cooling channel (7) and/or the conveying device (5) are arranged in such a manner that
a. cooling air from the interior of a handle (2) flows in grooves of an inner tube (8) of a burner neck (3) and/or that
b. cooling air flows through the - preferably entire - interior of a handle (2), and/or that
c. the flow direction of the cooling air extends at least in part, and preferably substantially, in the direction of the temperature gradient of the welding or cutting torch, and/or that
d. the cooling air flows at the end of a burner neck (3) and/or at a nozzle holder radially outward, in particular against an outer tube (9) of a burner nozzle (4) that is elongated towards the handle (2), and/or that
e. a direct inflow of cooling air into the area of the welding or cutting process is avoided, and/or that
f. an outer tube (9) of a burner nozzle (4) deflects the flow direction of the cooling air away from an outlet opening of the burner nozzle (4) and/or in the direction of a handle (2).

11. Method for operating a welding or cutting torch, wherein a conveying device (5), which is arranged at least in part at and/or in a handle (2) of the welding or cutting torch, propels ambient air to flow through a cooling channel for the purpose of force-cooling at least one part of the welding or cutting torch, and wherein energy for operating the conveying device (5) is extracted in a parasitical manner from process components and/or process products.

12. Method according to claim 11, **characterized in that** the ambient air that is propelled to flow cools a handle of the welding or cutting torch and/or a handle interior, in particular the entire handle interior, of the welding or cutting torch and/or a gas nozzle outside of the arch-side gas nozzle interior.

13. Method according to claim 11 or 12, **characterized in that** the ambient air that is propelled to flow is guided separately from process gases and/or an arc and/or the weld puddle.

14. Method for operating a welding or cutting torch according to one of the claims 11 to 13, **characterized in that** a cooling air flow - in particular of at least 15 liters per minute, in particular of 15 to 20 liters per minute - is created and/or is guided through at least one cooling channel (7) of the welding or cutting torch with a conveying device (5), in particular a compressor or a fan (6).

15. Method for operating a welding or cutting torch according to one of the claims 11 to 14, **characterized in that** the energy for operating the conveying device (5) is extracted in a parasitical manner - directly or indirectly - from the electric welding or cutting current, and/or from light that is generated during the welding or cutting process and/or the process heat that is generated during the welding or cutting process.

## Revendications

1. Torche de soudage ou de coupage refroidie par air, en particulier torche de soudage à main et/ou torche de soudage sous gaz protecteur, un dispositif d'alimentation (5), en particulier un ventilateur (6) ou un compresseur étant prévu, qui fournit de l'air ambiant comme air de refroidissement à travers au moins un canal de refroidissement (7) de la torche de soudage ou de coupage, le dispositif d'alimentation (5) soutirant l'énergie nécessaire à son fonctionnement au détriment d'au moins un composant de traitement et/ou de produits de traitement formés lors du processus de soudage ou de coupage, **caractérisée en ce que** le dispositif d'alimentation (5) est disposé au moins en partie sur et/ou dans un manche (2) de la torche de soudage ou de coupage.

2. Torche de soudage ou de coupage selon la revendication 1, **caractérisée en ce que** le dispositif d'alimentation (5) fournit de l'air ambiant comme air de refroidissement pour le refroidissement d'un manche de la torche de soudage ou de coupage et/ou pour le refroidissement d'un espace intérieur de manche, en particulier de tout l'espace intérieur de manche, de la torche de soudage ou de coupage et/ou pour le refroidissement d'un bec de gaz à l'extérieur de l'espace intérieur de manche du côté de l'arc électrique, à travers au moins un canal de refroidissement (7) de la torche de soudage ou de coupage.

3. Torche de soudage ou de coupage selon la revendication 1 ou 2, **caractérisée en ce que** l'air de refroidissement est conduit séparément de gaz de traitement et/ou d'un arc électrique et/ou du bain de soudage,
le canal de refroidissement (7) étant de préférence une conduite destinée à l'air de refroidissement séparée d'autres conduites, comme des conduites pour un gaz de traitement et/ou un gaz protecteur et/ou pour un gaz combustible et/ou pour un gaz plasmagène, et en particulier servant exclusivement au passage d'air de refroidissement.

4. Torche de soudage ou de coupage selon l'une quelconque des revendications 1 à 3, **caractérisée en ce que**
le dispositif d'alimentation (5) soutire l'énergie nécessaire à son fonctionnement au détriment d'un courant électrique de soudage ou de coupage, en particulier par piquage direct ou par couplage par induction, et en particulier soutire l'énergie nécessaire à son fonctionnement au détriment du courant de soudage ou de coupage, ou
de la lumière et/ou de la chaleur de traitement générées lors du processus de soudage ou de coupage.

5. Torche de soudage ou de coupage selon l'une quelconque des revendications 1 à 4, **caractérisée en ce que**
a. il est prévu au moins une cellule photoélectrique pour l'obtention de l'énergie nécessaire au fonctionnement du dispositif d'alimentation (5), et/ou en ce que
b. il est prévu un accumulateur d'énergie et/ou une batterie (16) pour l'accumulation d'énergie destinée au fonctionnement du dispositif d'alimentation (5).

6. Torche de soudage ou de coupage selon l'une quelconque des revendications 1 à 5, **caractérisée en ce qu'**il est prévu au moins une ouverture (12), à travers laquelle l'air de refroidissement peut être aspiré et/ou introduit.

7. Torche de soudage ou de coupage selon la revendication 6, **caractérisée en ce que** l'ouverture (12) est disposée sur un manche (2) de la torche de soudage ou de coupage en particulier à une extrémité d'un manche (2) de la torche de soudage ou de coupage située à l'opposé du col (3) de la torche, ou **en ce qu'**il est prévu une conduite d'amenée, qui présente l'ouverture (12), et/ou **en ce qu'**il est prévu une conduite d'amenée s'étendant à travers un groupe de tuyau souple (13) de la torche de soudage ou de coupage, et qui présente l'ouverture (12).

8. Torche de soudage ou de coupage selon l'une quelconque des revendications 6 ou 7, **caractérisée en ce que** le dispositif d'alimentation (5) est agencé sur ou dans l'ouverture (12), et/ou **en ce qu'**un dispositif de filtrage est disposé avant l'ouverture (12).

9. Torche de soudage ou de coupage selon l'une quelconque des revendications 1 à 8, **caractérisée en ce que** le canal de refroidissement (7) est agencé dans ou sur un manche (2) et/ou dans ou sur un col de torche (3) et/ou dans ou sur un tube intérieur (8) d'un col de torche (3) et/ou dans ou sur un tube extérieur (9) d'un col de torche (3) et/ou dans ou sur un bec de torche (4).

10. Torche de soudage ou de coupage selon l'une quelconque des revendications 1 à 9, **caractérisée en ce que** le canal de refroidissement (7) et/ou le dispositif d'alimentation (5) sont disposés de telle manière que
a. l'air de refroidissement provenant de l'espace intérieur d'un manche (2) s'écoule dans des rainures d'un tube intérieur (8) d'un col de torche (3), et/ou que
b. l'air de refroidissement traverse de préférence tout l'espace intérieur d'un manche (2), et/ou que
c. la direction d'écoulement de l'air de refroidissement soit au moins partiellement, de préférence essentiellement, orientée dans la direction du gradient de température de la torche de soudage ou de coupage, et/ou que
d. l'air de refroidissement s'écoule radialement vers l'extérieur à l'extrémité d'un col de torche (3) et/ou au niveau d'un porte-vent, en particulier contre un tube extérieur (9), prolongé jusqu'au manche (2), d'un bec de torche (4) et/ou, que
e. une entrée directe d'air de refroidissement dans la région du processus de soudage ou de coupage soit évitée, et/ou que
f. un tube extérieur (9) d'un bec de torche (4) dévie la direction d'écoulement de l'air de refroidissement depuis une ouverture de sortie du bec de torche (4) à l'écart et/ou en direction d'un manche (2).

11. Procédé de conduite d'une torche de soudage ou de coupage, dans lequel un dispositif d'alimentation (5) disposé au moins en partie sur et/ou dans un manche (2) de la torche de soudage ou de coupage entraîne de l'air ambiant de manière à ce qu'il s'écoule à travers un canal de refroidissement en vue du refroidissement forcé d'au moins une partie de la torche de soudage ou de coupage et dans lequel de l'énergie pour le fonctionnement du dispositif d'alimentation (5) est soutirée au détriment de composants et/ou de produits de traitement.

12. Procédé selon la revendication 11, **caractérisé en ce que** l'air ambiant entraîné en écoulement refroidit un manche de la torche de soudage ou de coupage et/ou un espace intérieur du manche, en particulier tout l'espace intérieur du manche, de la torche de soudage ou de coupage et/ou un bec de gaz à l'extérieur de l'espace intérieur du manche du côté de l'arc électrique.

13. Procédé selon la revendication 11 ou 12, **caractérisé en ce que** l'air ambiant entraîné en écoulement est conduit séparément de gaz de traitement et/ou d'un arc électrique et/ou du bain de soudage.

14. Procédé de conduite d'une torche de soudage ou de coupage selon l'une quelconque des revendications 11 à 13, **caractérisé en ce que** l'on produit avec un dispositif d'alimentation (5), en particulier un compresseur ou un ventilateur (6), un courant d'air de refroidissement - en particulier d'au moins 15 litres par minute, en particulier de 15 à 20 litres par minute - et/ou on le conduit à travers au moins un canal de refroidissement (7) de la torche de soudage ou de coupage.

15. Procédé de conduite d'une torche de soudage ou de coupage selon l'une quelconque des revendications 11 à 14, **caractérisé en ce que** l'on soutire l'énergie nécessaire au fonctionnement du dispositif d'alimentation (5) - directement ou indirectement - au détriment du courant électrique de soudage ou de coupage, et/ou de la lumière générée lors du processus de soudage ou de coupage et/ou de la chaleur de traitement générée lors du processus de soudage ou de coupage.
